(19) Europäisches Patentamt
European Patent Office
Office européen des brevets

(11) **EP 3 867 987 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **18830228.5**

(22) Anmeldetag: **18.12.2018**

(51) Internationale Patentklassifikation (IPC):
**H02J 3/36** *(2006.01)* **H02M 7/483** *(2007.01)*

(52) Gemeinsame Patentklassifikation (CPC):
**H02M 7/4835; H02J 3/36; H02M 7/4837**

(86) Internationale Anmeldenummer:
**PCT/EP2018/085524**

(87) Internationale Veröffentlichungsnummer:
**WO 2020/125950 (25.06.2020 Gazette 2020/26)**

(54) **BETREIBEN EINES MULTILEVELSTROMRICHTERS**

OPERATING A MULTILEVEL CONVERTER

FONCTIONNEMENT D'UN CONVERTISSEUR MULTINIVEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.08.2021 Patentblatt 2021/34**

(73) Patentinhaber: **Siemens Energy Global GmbH & Co. KG**
**81739 München (DE)**

(72) Erfinder:
• **AL-AREQI, Sanad**
**91052 Erlangen (DE)**
• **CHAUDHRY, Adnan**
**91052 Erlangen (DE)**
• **HUSSENNETHER, Volker**
**90482 Nürnberg (DE)**

(56) Entgegenhaltungen:
WO-A1-2016/192758    WO-A1-2018/221906
WO-A1-2018/221907    WO-A1-2019/007502

**Beschreibung**

Die Erfindung betrifft ein Verfahren zum Betreiben eines Multilevelstromrichters mit mehreren Phasenmodulen, die zueinander parallel geschaltet zwischen einem ersten Gleichspannungsanschluss und einem zweiten Gleichspannungsanschluss des Multilevelstromrichters angeordnet sind und jeweils eine Vielzahl von Modulen mit jeweils mindestens zwei elektronischen Schaltelementen und einem elektrischen Energiespeicher aufweisen. Jedes Phasenmodul weist einen ersten Phasenmodulzweig, der mit dem ersten Gleichspannungsanschluss verbunden ist, einen zweiten Phasenmodulzweig, der mit dem zweiten Gleichspannungsanschluss verbunden ist, und einen dritten Phasenmodulzweig, der den ersten Phasenmodulzweig mit dem zweiten Phasenmodulzweig verbindet, auf. Ferner weist der Multilevelstromrichter eine Schalteinrichtung auf, welche in einer ersten Schaltstellung einen Wechselspannungsanschluss des Phasenmoduls mit einem ersten Verbindungspunkt zwischen dem ersten Phasenmodulzweig und dem dritten Phasenmodulzweig verbindet und in einer zweiten Schaltstellung den Wechselspannungsanschluss mit einem zweiten Verbindungspunkt zwischen dem dritten Phasenmodulzweig und dem zweiten Phasenmodulzweig verbindet.

Ein Multilevelstromrichter (der auch als modularer Multilevelstromrichter bezeichnet wird) ist eine leistungselektronische Schaltung zum Umwandeln von elektrischer Energie. Mit einem Multilevelstromrichter kann beispielsweise Wechselstrom in Gleichstrom oder Gleichstrom in Wechselstrom umgewandelt werden. Ein Multilevelstromrichter weist eine Vielzahl von gleichartigen Modulen auf, welche elektrisch in Reihe geschaltet sind. Durch die elektrische Reihenschaltung der Module lassen sich hohe Ausgangsspannungen erreichen. Ein Multilevelstromrichter ist einfach an unterschiedliche Spannungen anpassbar (skalierbar) und eine gewünschte Ausgangsspannung kann relativ genau erzeugt werden. Ein Multilevelstromrichter kann vorteilhafterweise im Hochspannungsbereich eingesetzt werden, beispielsweise als Stromrichter bei einer Hochspannungs-Gleichstrom-Übertragungsanlage oder als Blindleistungskompensationsanlage.

Die Anzahl der Module in der elektrischen Reihenschaltung ist so zu wählen, dass der Multilevelstromrichter die benötigte Ausgangsspannung erzeugen kann. Außerdem muss die Anzahl der Module in der Reihenschaltung aber auch so groß sein, dass bei allen Betriebszuständen des Multilevelstromrichters die an den Modulen anliegende Spannung die maximal zulässige Modulspannung nicht überschreitet. Daher müssen mehr Module in der Reihenschaltung vorhanden sein, als zum Erzeugen einer vorgegebenen Ausgangsspannung eigentlich notwendig wären. Dies verursacht hohe Kosten, hohe Verlustleistungen und eine große Bauform des Multilevelstromrichters.

Die Phasenmodule eines herkömmlichen Multilevelstromrichters weisen jeweils zwei Phasenmodulzweige auf, von denen einer mit dem ersten Gleichspannungsanschluss verbunden ist und der andere mit dem zweiten Gleichspannungsanschluss des Multilevelstromrichters verbunden ist.

Aus der internationalen Patentanmeldung WO 2018/221907 A1 ist ein Multilevelstromrichter bekannt. Module dieses Multilevelstromrichters weisen außer den zwei üblicherweise vorhandenen elektronischen Schaltelementen ein drittes elektronisches Schaltelement auf, das einen modulinternen Verbindungspunkt zweier Bauelemente mit einem Wechselspannungsanschluss des Moduls verbindet.

Aus der Patentanmeldung WO 2018/221906 A1 ist ein ähnlich aufgebauter Multilevelstromrichter bekannt, dessen Module außer den üblicherweise vorhandenen elektronischen Schaltelementen zwei zusätzliche elektronische Schaltelemente aufweisen.

Die Schrift WO 2016/192758 A1 offenbart einen Gleichspannungswandler mit einem ersten Teilumrichter und einem zweiten Teilumrichter, die miteinander in Reihe geschaltet sind. Eine Kopplungseinrichtung umfasst eine Reihenschaltung von zweipoligen Kopplungsmodulen. Diese Reihenschaltung der Kopplungsmodule entspricht einer steuerbaren Kapazität.

Die Erfindung betrifft einen eingangs beschriebenen speziellen Multilevelstromrichter, der im Gegensatz zu einem herkömmlichen Multilevelstromrichter nicht nur zwei, sondern drei Phasenmodulzweige je Phasenmodul aufweist. Ein derartiger Multilevelstromrichter ermöglicht, die Anzahl der Module zwischen dem Wechselspannungsanschluss eines Phasenmoduls und dem ersten Gleichspannungsanschluss des Multilevelstromrichters nach Bedarf um die Anzahl der Module des dritten Phasenmodulzweigs zu vergrößern oder zu verkleinern. Ebenso kann die Anzahl der Module zwischen dem Wechselspannungsanschluss eines Phasenmoduls und dem zweiten Gleichspannungsanschluss des Multilevelstromrichters um die Anzahl der Module des dritten Phasenmodulzweigs vergrößert oder verkleinert werden. Mit anderen Worten können also die Module des dritten Phasenmodulzweigs bedarfsweise dem ersten Phasenmodulzweig oder dem zweiten Phasenmodulzweig zugeordnet werden. Ein derartiger Multilevelstromrichter ist in der nachveröffentlichten Schrift WO 2019/007502 A1 beschrieben.

Die Module des dritten Phasenmodulzweigs eines Phasenmoduls haben also eine Doppelfunktion. Je nach Schaltstellung der Schalteinrichtung des Phasenmoduls werden diese Module zwischen den Wechselspannungsanschluss des Phasenmoduls und den ersten Gleichspannungsanschluss oder zwischen den Wechselspannungsanschluss und den zweiten Gleichspannungsanschluss geschaltet. Die Module des dritten Phasenmodulzweigs eines Phasenmoduls werden also zum Erzeugen verschiedener Spannungen des Phasenmoduls eingesetzt. Durch die Möglichkeit der Umschaltung zwischen der ersten Schaltstellung und der zweiten Schaltstellung der Schalteinrichtung eines Phasenmoduls brauchen die Module des dritten Phasenmodulzweiges nur einmal vorhanden zu sein. Bei einem herkömmlichen Multilevelstromrichter müssen die zusätzlichen Module dagegen in jedem Phasenmodul zweimal vorhanden sein, nämlich einmal in dem ersten (positivseitigen) Phasenmodulzweig und einmal in dem zweiten (negativseitigen) Phasenmodulzweig des Phasenmoduls. Durch den dritten Phasenmodulzweig in jedem Phasenmodul des speziellen Multilevelstromrichters kann die Anzahl der benötigten Module pro Phasenmodul daher gegenüber einem herkömmlichen Multilevelstromrichter deutlich verringert werden. Dies führt auch zu einer deutlichen Verringerung der Größe des Multilevelstromrichters, der Stromrichterverluste und der Kosten. Es ist möglich, 25 % der benötigten Module einzusparen.

Im Betrieb eines herkömmlichen Multilevelstromrichters mit zwei Phasenmodulzweigen je Phasenmodul werden Energieungleichgewichte zwischen den Energien, die in den einzelnen Phasenmodulzweigen gespeichert sind, ausgeglichen, um die Phasenmodulzweige gleichmäßig zu belasten. Dabei wird einerseits ein so genannter horizontaler Energieausgleich zwischen den Phasenmodulen vorgenommen und andererseits wird ein so genannter vertikaler Energieausgleich zwischen den beiden Phasenmodulzweigen jedes Phasenmoduls vorgenommen. Dazu werden in Abhängigkeit von den Summen und Differenzen der Energien der beiden Phasenmodulzweige jedes Phasenmoduls Kreisströme des Multilevelstromrichters geregelt, mit denen Energie zwischen den Phasenmodulen und zwischen den Phasenmodulzweigen der einzelnen Phasenmodule übertragen wird.

Der Erfindung liegt die Aufgabe zugrunde, ein Verfahren zum Energieausgleich zwischen den Phasenmodulzweigen eines oben beschriebenen Multilevelstromrichters anzugeben, der drei Phasenmodulzweige je Phasenmodul aufweist.

Die Aufgabe wird erfindungsgemäß durch ein Verfahren mit den Merkmalen des Anspruchs 1 gelöst.

Vorteilhafte Ausgestaltungen der Erfindung sind Gegenstand der Unteransprüche.

Bei dem erfindungsgemäßen Verfahren wird für jedes Phasenmodul des Multilevelstromrichters eine Energiesummengröße ermittelt, die ein Maß für die Summe der Energien des ersten Phasenmodulzweigs und des zweiten Phasenmodulzweigs ist. Ferner wird für jedes Phasenmodul in Abhängigkeit von der Schaltstellung der Schalteinrichtung des Phasenmoduls eine Energiedifferenzgröße ermittelt, die in der ersten Schaltstellung der Schalteinrichtung ein Maß für die Differenz der Energien des zweiten Phasenmodulzweigs und des dritten Phasenmodulzweigs und in der zweiten Schaltstellung der Schalteinrichtung ein Maß für die Differenz der Energien des ersten Phasenmodulzweigs und des dritten Phasenmodulzweigs ist. In Abhängigkeit von den Energiesummengrößen und Energiedifferenzgrößen der Phasenmodule werden Kreisströme des Multilevelstromrichters zum Ausgleich von Energieungleichgewichten zwischen den Phasenmodulzweigen geregelt.

Die Erfindung sieht also vor, Kreisströme des Multilevelstromrichters zum Ausgleich von Energieungleichgewichten in Abhängigkeit von Summen der Energien des ersten Phasenmodulzweigs und des zweiten Phasenmodulzweigs jedes Phasenmoduls und von Differenzen der Energien des ersten oder zweiten Phasenmodulzweigs und des dritten Phasenmodulzweigs jedes Phasenmoduls zu regeln. Dabei hängt es von der Schaltstellung der Schalteinrichtung eines Phasenmoduls ab, ob die Differenz der Energien des ersten und des dritten Phasenmodulzweigs oder die Differenz der Energien des zweiten und des dritten Phasenmodulzweigs verwendet wird. Die Erfindung ermöglicht die Übertragung des für herkömmliche Multilevelstromrichter verwendeten Prinzips des Energieausgleichs zwischen den Phasenmodulzweigen auf den speziellen Multilevelstromrichter mit drei Phasenmodulzweigen je Phasenmodul, indem wie bei einem herkömmlichen Multilevelstromrichter Kreisströme des Multilevelstromrichters zum Energieausgleich geregelt werden. Dabei wird zur Regelung der Kreisströme dieselbe Anzahl von Summen und Differenzen von Energien der Phasenmodulzweige wie bei einem herkömmlichen Multilevelstromrichter mit derselben Anzahl von Phasenmodulen verwendet, obwohl der spezielle Multilevelstromrichter eine größere Anzahl von Phasenmodulzweigen je Phasenmodul als ein herkömmlicher Multilevelstromrichter aufweist. Beispielsweise werden bei einem dreiphasigen speziellen Multilevelstromrichter aus den Energien der insgesamt neun Phasenmodulzweige drei Energiesummengrößen und drei Energiedifferenzgrößen gebildet und damit ebenso viele wie bei einem herkömmlichen dreiphasigen Multilevelstromrichter mit zwei Phasenmodulzweigen je Phasenmodul. Dadurch kann für den speziellen Multilevelstromrichter mit drei Phasenmodulzweigen je Phasenmodul derselbe Kreisstromregler zum Energieausgleich verwendet werden, der auch für herkömmliche Multilevelstromrichter verwendet wird.

Eine Ausgestaltung der Erfindung sieht vor, dass aus den Energiesummengrößen aller Phasenmodule ein Energiesummenraumzeiger gebildet wird und ein Gleichanteil der Kreisströme in Abhängigkeit von dem Energiesummenraumzeiger zum Ausgleich von Energieungleichgewichten zwischen den Phasenmodulen geregelt wird. Diese Ausgestaltung der Erfindung nutzt aus, dass der Gleichanteil der Kreisströme eine direkte Energieübertragung zwischen Phasenmodulen ermöglicht und somit zum horizontalen Energieausgleich genutzt werden kann, und dass der Gleichanteil von dem Energiesummenraumzeiger abhängt.

Eine weitere Ausgestaltung der Erfindung sieht vor, dass aus den Energiedifferenzgrößen aller Phasenmodule ein Energiedifferenzraumzeiger gebildet wird und ein Mitsystem und ein Gegensystem der Kreisströme in Abhängigkeit von dem Energiedifferenzraumzeiger zum Ausgleich von Energieungleichgewichten zwischen den Phasenmodulzweigen der einzelnen Phasenmodule geregelt werden. Diese Ausgestaltung der Erfindung nutzt aus, dass durch die Regelung des Mitsystems und des Gegensystems der Kreisströme ein vertikaler Energieausgleich zwischen den Phasenmodulzweigen der einzelnen Phasenmodule erreicht werden kann, und dass das Mitsystem und das Gegensystem der Kreisströme von dem Energiedifferenzraumzeiger abhängen.

Weitere Ausgestaltungen der Erfindung sehen vor, dass die Energiesummengröße jedes Phasenmoduls aus Spannungen ermittelt wird, die jeweils an dem ersten Phasenmodulzweig und an dem zweiten Phasenmodulzweig des Phasenmoduls anliegen, und/oder dass die Energiedifferenzgröße jedes Phasenmoduls in der ersten Schaltstellung der Schalteinrichtung des Phasenmoduls aus Spannungen ermittelt wird, die jeweils an dem zweiten Phasenmodulzweig und an dem dritten Phasenmodulzweig des Phasenmoduls anliegen, und in der zweiten Schaltstellung der Schalteinrichtung des Phasenmoduls aus Spannungen ermittelt wird, die jeweils an dem ersten Phasenmodulzweig und an dem dritten Phasenmodulzweig des Phasenmoduls anliegen. Diese Ausgestaltungen der Erfindung nutzen aus, dass die Energie eines Phasenmodulzweigs von der an dem Phasenmodulzweig anliegenden Spannung abhängt.

Der Multilevelstromrichter kann so ausgestaltet sein, dass die Schalteinrichtung eines Phasenmoduls in der zweiten Schaltstellung den Wechselspannungsanschluss des Phasenmoduls von dem ersten Verbindungspunkt (elektrisch) trennt und in der ersten Schaltstellung den Wechselspannungsanschluss von dem zweiten Verbindungspunkt (elektrisch) trennt. Allgemein gesagt, verbindet die Schalteinrichtung den Wechselspannungsanschluss in jeder Schaltstellung jeweils nur maximal mit einem (der Schaltstellung zugehörigen) Verbindungspunkt (und trennt den Wechselspannungsanschluss von den jeweils anderen Verbindungspunkten.) Die Schalteinrichtung verbindet also (in ihren Schaltstellungen) den Wechselspannungsanschluss jeweils exklusiv mit einem (der Schaltstellung zugehörigen) Verbindungspunkt. Natürlich kann es auch eine Schaltstellung geben, in der der Wechselspannungsanschluss von allen Verbindungspunkten getrennt ist.

Der Multilevelstromrichter kann auch so ausgestaltet sein, dass der erste Phasenmodulzweig, der zweite Phasenmodulzweig und der dritte Phasenmodulzweig jeweils mindestens zwei der Module, insbesondere jeweils mindestens fünf der Module, in einer Reihenschaltung aufweisen.

Der Multilevelstromrichter kann auch so ausgestaltet sein, dass die Schalteinrichtung (als Schaltelemente) Thyristoren aufweist. Mittels Thyristoren lässt sich die Umschaltung zwischen dem ersten Verbindungspunkt und dem zweiten Verbindungspunkt besonders schnell durchführen.

Der Multilevelstromrichter kann auch so ausgestaltet sein, dass

- die Schalteinrichtung jedes Phasenmoduls einen ersten leistungselektronischen Schalter aufweist, der bei der ersten Schaltstellung der Schalteinrichtung den Wechselspannungsanschluss mit dem ersten Verbindungspunkt (elektrisch) verbindet und bei der zweiten Schaltstellung der Schalteinrichtung den Wechselspannungsanschluss von dem ersten Verbindungspunkt (elektrisch) trennt und
- die Schalteinrichtung jedes Phasenmoduls einen zweiten leistungselektronischen Schalter aufweist, der bei der zweiten Schaltstellung der Schalteinrichtung den Wechselspannungsanschluss mit dem zweiten Verbindungspunkt (elektrisch) verbindet und bei der ersten Schaltstellung der Schalteinrichtung den Wechselspannungsanschluss von dem zweiten Verbindungspunkt (elektrisch) trennt. Mit den beiden leistungselektronischen Schaltern einer Schalteinrichtung lässt sich die Umschaltung zwischen dem ersten Verbindungspunkt und dem zweiten Verbindungspunkt besonders einfach und schnell durchführen.

Der Multilevelstromrichter kann so ausgestaltet sein, dass der erste leistungselektronische Schalter und der zweite leistungselektronische Schalter jeder Schalteinrichtung jeweils Thyristoren aufweisen.

Der Multilevelstromrichter kann auch so ausgestaltet sein, dass der erste leistungselektronische Schalter und der zweite leistungselektronische Schalter jeder Schalteinrichtung jeweils antiparallel geschaltete Thyristoren aufweisen. Dadurch können die leistungselektronischen Schalter den durch den Wechselspannungsanschluss des Phasenmoduls fließenden Wechselstrom mit beiden Polaritäten schalten.

Der Multilevelstromrichter kann so ausgestaltet sein, dass mindestens ein Modul des dritten Phasenmodulzweigs so ausgestaltet ist, dass es eine Spannung positiver oder negativer Polarität auszugeben imstande ist. Dies unterstützt vorteilhafterweise insbesondere den Abschaltvorgang der Thyristoren. Dabei ist besonders vorteilhaft, dass das mindestens eine Modul in der Lage ist, sowohl eine negative Spannung als auch eine positive Spannung zu erzeugen und auszugeben. Mittels dieser Spannung lässt sich die Kommutierung des über den Wechselspannungsanschluss fließenden Stroms von dem ersten Verbindungspunkt zu dem zweiten Verbindungspunkt sicher und zuverlässig realisieren. Dies kann beispielsweise dadurch erfolgen, dass mittels des Moduls eine dem ursprünglichen Stromfluss entgegengerichtete Spannung als Kommutierungsspannung erzeugt wird.

Der Multilevelstromrichter kann so ausgestaltet sein, dass mindestens ein Modul des dritten Phasenmodulzweigs eine Vollbrückenschaltung aufweist. Dabei ist besonders vorteilhaft, dass das mindestens eine Modul mit Vollbrückenschaltung in der Lage ist, sowohl eine negative Spannung als auch eine positive Spannung zu erzeugen und auszugeben. Dies unterstützt die Kommutierung, wie vorstehend angegeben ist.

Der Multilevelstromrichter kann so ausgestaltet sein, dass die Vollbrückenschaltung vier elektronische Schaltelemente und einen elektrischen Energiespeicher aufweist.

Der Multilevelstromrichter kann auch so ausgestaltet sein, dass die Schalteinrichtung jedes Phasenmoduls ihre Schaltstellungen, insbesondere die erste Schaltstellung und die zweite Schaltstellung, in Abhängigkeit von dem Augenblickswert der an dem Wechselspannungsanschluss des Phasenmoduls anliegenden Spannung (Wechselspannung) einnimmt. Vorteilhafterweise kann die Schalteinrichtung so angesteuert werden, dass sie die Schaltstellungen in Abhängigkeit von dem Augenblickswert der an den Wechselspannungsanschluss anliegenden Spannung (Wechselspannung) einnimmt. Dadurch ergibt sich eine besonders einfache Art der Ansteuerung der Schalteinrichtung. Es braucht lediglich der Augenblickswert der Wechselspannung ausgewertet zu werden und in Abhängigkeit von der Höhe des Augenblickswertes nimmt die Schalteinrichtung die jeweilige Schaltstellung (insbesondere die erste Schaltstellung und die zweite Schaltstellung) ein.

Der Multilevelstromrichter kann auch so ausgestaltet sein, dass

- die Schalteinrichtung jedes Phasenmoduls die erste Schaltstellung einnimmt, wenn der Augenblickswert der an dem Wechselspannungsanschluss des Phasenmoduls anliegenden Spannung größer (oder gleich) Null ist, und die Schalteinrichtung die zweite Schaltstellung einnimmt, wenn der Augenblickswert der an dem Wechselspannungsanschluss anliegenden Spannung kleiner Null ist, oder
- die Schalteinrichtung jedes Phasenmoduls die erste Schaltstellung einnimmt, wenn der Augenblickswert der an dem Wechselspannungsanschluss des Phasenmoduls anliegenden Spannung in einem ersten vorgewählten Spannungsbereich liegt, und die Schalteinrichtung die zweite Schaltstellung einnimmt, wenn der Augenblickswert der an dem Wechselspannungsanschluss anliegenden Spannung in einem zweiten vorgewählten Spannungsbereich liegt.

Die erste Alternative bildet vorteilhafterweise eine besonders einfache Möglichkeit festzulegen, wann die Schalteinrichtung die erste Schaltstellung und wann sie die zweite Schaltstellung einnimmt: wenn der Augenblickswert der Wechselspannung größer (oder gleich) null ist, wird die erste Schaltstellung eingenommen; wenn der Augenblickswert der Wechselspannung kleiner null ist, wird die zweite Schaltstellung eingenommen. Die zweite Alternative gibt an, dass die erste Schaltstellung eingenommen wird, wenn der Augenblickswert der Wechselspannung in einem ersten vorgewählten Spannungsbereich liegt. Wenn der Augenblickswert in einem zweiten vorgewählten Spannungsbereich liegt, dann wird die zweite Schaltstellung eingenommen. Diese Variante ermöglicht ein noch flexibleres Schalten der Schalteinrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

Figur 1     ein Ausführungsbeispiel eines Phasenmoduls eines Multilevelstromrichters,

Figur 2     einen beispielhaften Spannungsverlauf an dem Phasenmodul gemäß Figur 1,

Figur 3     eine alternative Darstellung des Phasenmoduls gemäß Figur 1,

Figur 4     ein Ausführungsbeispiel eines Multilevelstromrichters mit drei Phasenmodulen,

Figur 5     ein Ausführungsbeispiel eines Moduls eines Multilevelstromrichters,

Figur 6     ein weiteres Ausführungsbeispiel eines Moduls eines Multilevelstromrichters,

Figur 7     ein Ablaufdiagramm eines Ausführungsbeispiels des erfindungsgemäßen Verfahrens,

Figur 8     ein Blockdiagramm einer Bestimmung eines Sollstromraumzeigers für die Regelung von Kreisströmen eines Multilevelstromrichters.

Einander entsprechende Teile sind in den Figuren mit denselben Bezugszeichen versehen.

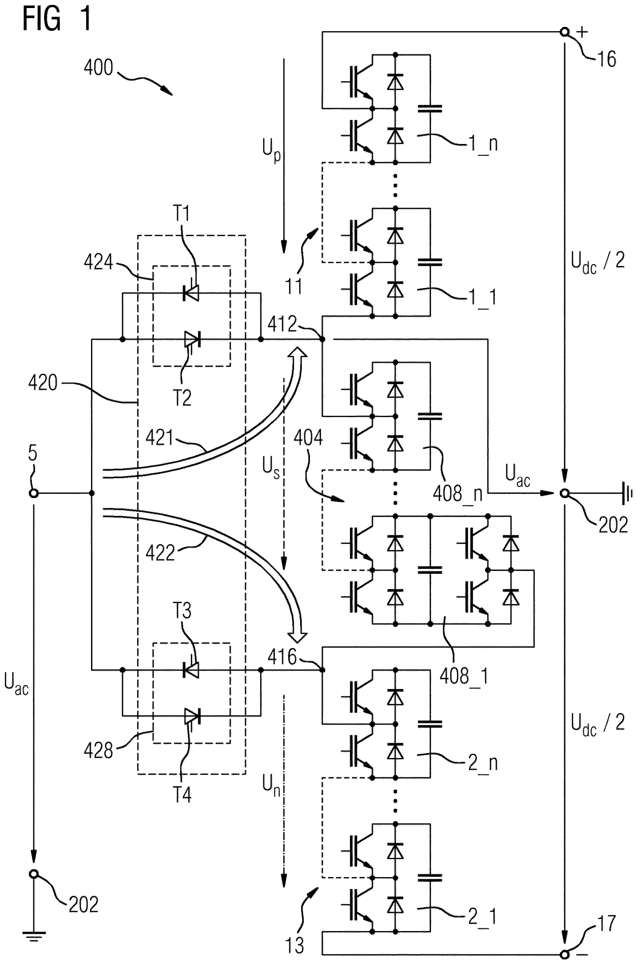

In Figur 1 ist ein Ausführungsbeispiel eines Phasenmoduls 400 eines Multilevelstromrichters 800 dargestellt. Das Phasenmodul 400 weist einen ersten (positivseitigen) Phasenmodulzweig 11, einen zweiten (negativseitigen) Phasenmodulzweig 13 und einen dritten (mittleren) Phasenmodulzweig 404 auf. Über dem ersten Phasenmodulzweig 11 liegt eine erste Spannung $U_p$ an, über dem zweiten Phasenmodulzweig 13 liegt eine zweite Spannung $U_n$ an und über dem dritten Phasenmodulzweig 404 liegt eine dritte Spannung $U_s$ an. Das Phasenmodul 400 ist zwischen einem ersten Gleichspannungsanschluss 16 und einem zweiten Gleichspannungsanschluss 17 angeordnet, wobei der erste Phasenmodulzweig 11 mit dem ersten Gleichspannungsanschluss 16 verbunden ist. Der zweite Phasenmodulzweig 13 ist mit dem zweiten Gleichspannungsanschluss 17 verbunden. Jeder Phasenmodulzweig weist eine Vielzahl von Modulen auf.

Im Ausführungsbeispiel weist der erste Phasenmodulzweig 11 n Module 1_1 ... 1_n auf, die jeweils in Halbbrückenschaltung (Halbbrücken-Module) oder in Vollbrückenschaltung (Vollbrücken-Module) ausgestaltet sein können. Ebenso weist der zweite Phasenmodulzweig 13 n Module 2_1 ... 2_n auf, die jeweils in Halbbrückenschaltung (Halbbrücken-Module) oder in Vollbrückenschaltung (Vollbrücken-Module) ausgestaltet sein können. Der erste Phasenmodulzweig 11 und der zweite Phasenmodulzweig 13 können also beispielsweise auch jeweils nur Halbbrücken-Module oder jeweils nur Vollbrücken-Module aufweisen.

Der dritte Phasenmodulzweig 404 weist mindestens ein Modul 408_1 mit einer Vollbrückenschaltung (Vollbrücken-Modul 408_1) auf, sowie weitere Module 408_2 bis 408_n, die jeweils in Halbbrückenschaltung (Halbbrücken-Module) oder in Vollbrückenschaltung (Vollbrücken-Module) ausgestaltet sein können.

Der dritte Phasenmodulzweig 404 verbindet den ersten Phasenmodulzweig 11 mit dem zweiten Phasenmodulzweig 13 unter Ausbildung eines ersten Verbindungspunktes 412 zwischen dem ersten Phasenmodulzweig 11 und dem dritten Phasenmodulzweig 404 und unter Ausbildung eines zweiten Verbindungspunktes 416 zwischen dem dritten Phasenmodulzweig 404 und dem zweiten Phasenmodulzweig 13. Eine Schalteinrichtung 420 ist dazu eingerichtet, in einer ersten Schaltstellung 421 einen Wechselspannungsanschluss 5 des Phasenmoduls 400 mit dem ersten Verbindungspunkt 412 elektrisch zu verbinden, und in einer zweiten Schaltstellung 422 den Wechselspannungsanschluss 5 mit dem zweiten Verbindungspunkt 416 elektrisch zu verbinden. Weiterhin ist die Schalteinrichtung 420 dazu eingerichtet, in der zweiten Schaltstellung 422 den Wechselspannungsanschluss 5 elektrisch von dem ersten Verbindungspunkt 412 zu trennen und in der ersten Schaltstellung 421 den Wechselspannungsanschluss 5 elektrisch von dem zweiten Verbindungspunkt 416 zu trennen.

Die Schalteinrichtung 420 weist als Schaltelemente einen ersten Thyristor T1, einen zweiten Thyristor T2, einen dritten Thyristor T3 und einen vierten Thyristor T4 auf. Genauer gesagt weist die Schalteinrichtung einen ersten leistungselektronischen Schalter 424 und einen zweiten leistungselektronischen Schalter 428 auf. Der erste leistungselektronische Schalter 424 weist dabei den ersten Thyristor T1 und den zweiten Thyristor T2 auf; der zweite leistungselektronische Schalter 428 weist dabei den dritten Thyristor T3 und den vierten Thyristor T4 auf. Der erste leistungselektronische Schalter 424 weist also antiparallel geschaltete Thyristoren T1 und T2 auf; der zweite leistungselektronische Schalter 428 weist antiparallel geschaltete Thyristoren T3 und T4 auf.

Die Darstellung mit einzelnen Thyristoren T1, T2, T3 und T4 ist hierbei nur symbolisch zu verstehen. In der Realität können beispielsweise eine größere Anzahl von Thyristoren in Reihe und/oder parallel geschaltet sein, um die benötigten Spannungs- und Stromwerte zu realisieren.

Der erste leistungselektronische Schalter 424 verbindet bei der ersten Schaltstellung der Schalteinrichtung 420 den Wechselspannungsanschluss 5 mit dem ersten Verbindungspunkt 412 elektrisch; der erste leistungselektronische Schalter 424 trennt bei der zweiten Schaltstellung der Schalteinrichtung 420 den Wechselspannungsanschluss 5 von dem ersten Verbindungspunkt 412 elektrisch. Der zweite leistungselektronische Schalter 428 verbindet bei der zweiten Schaltstellung der Schalteinrichtung 420 elektrisch den Wechselspannungsanschluss 5 mit dem zweiten Verbindungspunkt 416; der zweite leistungselektronische Schalter 428 trennt bei der ersten Schaltstellung der Schalteinrichtung 420 den Wechselspannungsanschluss 5 von dem zweiten Verbindungspunkt 416 elektrisch.

Zwischen dem Wechselspannungsanschluss 5 und einem Masseanschluss 202 liegt eine Wechselspannung $U_{ac}$ an. Zwischen dem ersten Gleichspannungsanschluss 16 und dem Masseanschluss 202 liegt die Spannung 1/2 $U_{dc}$ an, wobei $U_{dc}$ die gesamte Gleichspannung ist, die zwischen dem ersten Gleichspannungsanschluss 16 und dem zweiten Gleichspannungsanschluss 17 anliegt. Zwischen dem Masseanschluss 202 und dem zweiten Gleichspannungsanschluss 17 liegt ebenfalls die Spannung 1/2 $U_{dc}$ an.

Die Schalteinrichtung 420 nimmt ihre Schaltstellungen (also die erste Schaltstellung und die zweite Schaltstellung) in Abhängigkeit von dem Augenblickswert der an dem Wechselspannungsanschluss 5 anliegenden Wechselspannung $U_{ac}$ ein. Genauer gesagt wird die Schalteinrichtung 420 von einer (nicht dargestellten) Ansteuereinrichtung so angesteuert, dass sie ihre Schaltstellungen (also die erste Schaltstellung und die zweite Schaltstellung) in Abhängigkeit von dem Augenblickswert der an dem Wechselspannungsanschluss 5 anliegenden Wechselspannung $U_{ac}$ einnimmt. Dabei nimmt die Schalteinrichtung 420 dann die erste Schaltstellung ein, wenn der Augenblickswert der Wechselspannung $U_{ac}$ größer (oder gleich) Null ist. Dann ist der erste Wechselspannungsanschluss 5 mit dem ersten Verbindungspunkt 412 elektrisch verbunden. Die Schalteinrichtung 420 nimmt die zweite Schaltstellung ein, wenn der Augenblickswert der an dem Wechselspannungsanschluss 5 anliegenden Wechselspannung $U_{ac}$ kleiner Null ist. Dann ist der erste Wechselspannungsanschluss 5 mit dem zweiten Verbindungspunkt 416 elektrisch verbunden.

Der Multilevelstromrichter 800 kann auch so eingerichtet sein, dass die Schalteinrichtung 420 die erste Schaltstellung einnimmt, wenn der Augenblickswert der an dem Wechselspannungsanschluss 5 anliegenden Wechselspannung $U_{ac}$ in einem ersten vorgewählten Spannungsbereich liegt, und die Schalteinrichtung 420 die zweite Schaltstellung einnimmt, wenn der Augenblickswert der an dem Wechselspannungsanschluss anliegenden Wechselspannung $U_{ac}$ in einem zweiten vorgewählten Spannungsbereich liegt. Der erste vorgewählte Spannungsbereich kann zum Beispiel der Spannungsbereich zwischen 0 und +1/2 $U_{dc}$ sein; der zweite vorgewählte Spannungsbereich kann zum Beispiel der Spannungsbereich zwischen -1/2 $U_{dc}$ und 0 sein.

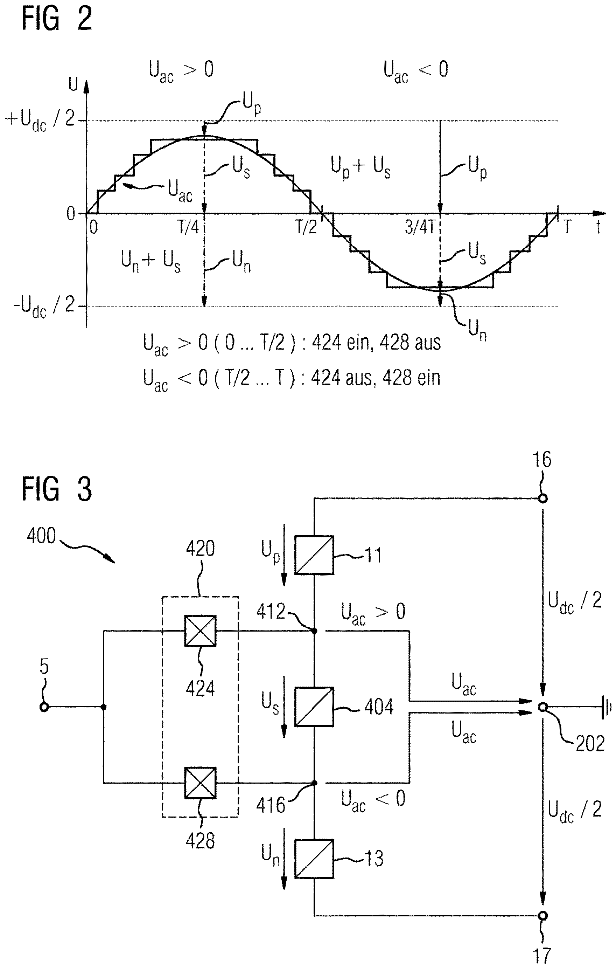

In Figur 2 sind beispielhaft sich in dem Phasenmodul 400 ergebende Spannungen dargestellt. Während des Zeitintervalls zwischen t = 0 und t = 1/2 T (also während der Zeitspanne, bei der die Augenblickswerte der Wechselspannung $U_{ac}$ größer null sind) liegt an dem ersten Phasenmodulzweig 11 nur die relativ geringe Spannung $U_p$ an. Die größere Spannung ($U_{dc}$ - $U_P$) verteilt sich auf den zweiten Phasenmodulzweig 13 (als Spannung $U_n$) und auf den dritten Phasenmodulzweig 404 (als Spannung Us). Dadurch liegt an dem ersten Phasenmodulzweig 11, an dem zweiten Phasenmodulzweig 13 und an dem dritten Phasenmodulzweig 404 jeweils maximal die Spannung 1/2 $U_{dc}$ an. Also braucht jeder Phasenmodulzweig 11, 13 und 404 nur jeweils für die halbe maximale Gleichspannung 1/2 $U_{dc}$ ausgestaltet zu sein. Während der zweiten halben Periodendauer (also im Bereich zwischen t = 1/2 T und t = T) liegt an dem zweiten Phasenmodulzweig 13 nur die relativ geringe Spannung $U_n$ an, während sich die größere Spannung ($U_{dc}$ - $U_n$) auf den ersten Phasenmodulzweig 11 und den zweiten Phasenmodulzweig 404 verteilt. Analog zu den Vorgängen in der ersten Hälfte der Periode der Wechselspannung $U_{ac}$ tritt wieder an jedem Phasenmodulzweig 11, 13, 404 maximal die Spannung 1/2 $U_{dc}$ auf.

In Figur 3 ist das Phasenmodul 400 der Figur 1 noch einmal in einer vereinfachten Darstellung dargestellt. Dazu sind der erste Phasenmodulzweig 11, der zweite Phasenmodulzweig 13 und der dritte Phasenmodulzweig 404 symbolhaft jeweils als ein Quadrat mit einer eingezeichneten Diagonale dargestellt. Der erste leistungselektronische Schalter 424 und der zweite leistungselektronische Schalter 428 sind jeweils als ein kleineres Quadrat mit zwei eingezeichneten Diagonalen dargestellt. In Figur 3 ist weiterhin mittels Spannungspfeilen dargestellt, wie die an dem Wechselspannungsanschluss 5 gegenüber dem Masseanschluss 202 auftretende Wechselspannung $U_{ac}$ während der ersten Halbperiode der Wechselspannung ($U_{ac}$ > 0) zwischen dem ersten Verbindungspunkt 412 und dem Masseanschluss 202 auftritt. Während der zweiten Halbperiode ($U_{ac}$ < 0) tritt die Wechselspannung $U_{ac}$ zwischen dem zweiten Verbindungspunkt 416 und dem Masseanschluss 202 auf (diese Darstellung setzt voraus, dass der erste leistungselektronische Schalter 424 und der zweite leistungselektronische Schalter 428 sich wie ideale Schalter verhalten, das heißt, über diesen Schaltern 424 und 428 tritt im eingeschalteten Zustand kein Spannungsabfall auf).

Der Wechselspannungsanschluss 5 wird mit dem ersten Verbindungspunkt 412 elektrisch verbunden und von dem zweiten Verbindungspunkt 416 elektrisch getrennt, wenn der Augenblickswert der an dem Wechselspannungsanschluss 5 anliegenden Wechselspannung $U_{ac}$ größer (oder gleich) Null ist. Der Wechselspannungsanschluss 5 wird mit dem zweiten Verbindungspunkt 416 elektrisch verbunden und von dem ersten Verbindungspunkt 412 elektrisch getrennt, wenn der Augenblickswert der an dem Wechselspannungsanschluss 5 anliegenden Wechselspannung $U_{ac}$ kleiner Null ist.

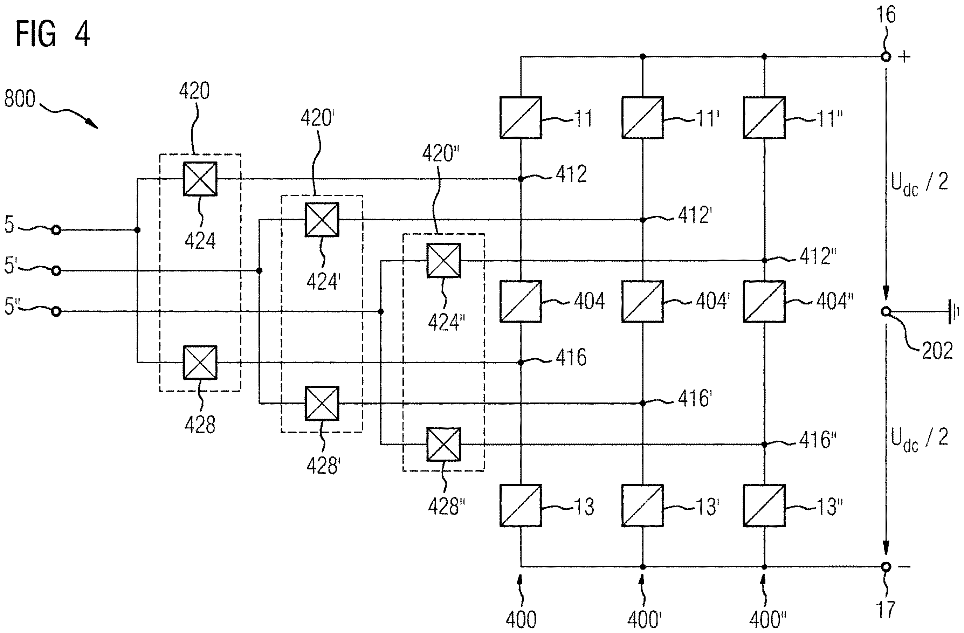

In Figur 4 ist ein Ausführungsbeispiel eines dreiphasigen Multilevelstromrichters 800 dargestellt. Der Multilevelstromrichter 800 weist drei Phasenmodule 400, 400', 400'' gemäß der Figur 3 auf. Ein erstes Phasenmodul 400 weist die Phasenmodulzweige 11, 13, 404, die Schalteinrichtung 420 mit den leistungselektronischen Schaltern 424, 428, die Verbindungspunkte 412, 416 und den Wechselspannungsanschluss 5 auf. Ein zweites Phasenmodul 400' weist die Phasenmodulzweige 11', 13', 404', die Schalteinrichtung 420' mit den leistungselektronischen Schaltern 424', 428', die Verbindungspunkte 412', 416' und den Wechselspannungsanschluss 5' auf. Das dritte Phasenmodul 400'' weist die Phasenmodulzweige 11'', 13'', 404'', die Schalteinrichtung 420'' mit den leistungselektronischen Schaltern 424'', 428'', die Verbindungspunkte 412'', 416'' und den Wechselspannungsanschluss 5'' auf.

Zum Betrieb des Multilevelstromrichters 800 wird der Augenblickswert jeder an einem Wechselspannungsanschluss 5, 5', 5'' des Multilevelstromrichters 800 anliegenden Spannung gemessen. In Abhängigkeit von dem gemessenen Augenblickswert wird dann der Wechselspannungsanschluss 5, 5', 5'' mit dem jeweiligen ersten Verbindungspunkt 412, 412', 412'' oder dem jeweiligen zweiten Verbindungspunkt 416, 416', 416'' elektrisch verbunden. Dabei ist jeder Wechselspannungsanschluss 5, 5', 5'' jeweils nur mit einem der Verbindungspunkte 412, 412', 412'', 416, 416', 416'' elektrisch verbunden und von den anderen Verbindungspunkten 412, 412', 412", 416, 416', 416'' elektrisch getrennt.

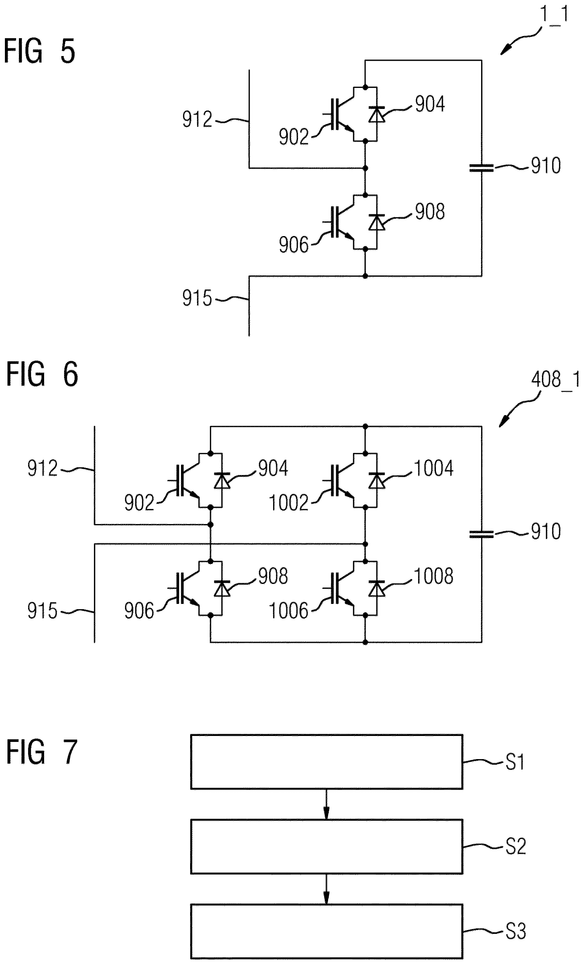

In Figur 5 ist ein Ausführungsbeispiel eines Moduls 1_1 des Multilevelstromrichters 800 dargestellt.

Das Modul 1_1 ist als ein Halbbrücken-Modul ausgestaltet. Das Modul 1_1 weist ein erstes (abschaltbares) elektronisches Schaltelement 902 (erstes abschaltbares Halbleiterventil 902) mit einer ersten antiparallel geschalteten Diode 904 auf. Weiterhin weist das Modul 1_1 ein zweites (abschaltbares) elektronisches Schaltelement 906 (zweites abschaltbares Halbleiterventil 906) mit einer zweiten antiparallel geschalteten Diode 908 sowie einen elektrischen Energiespeicher 910 in Form eines Kondensators auf. Das erste elektronische Schaltelement 902 und das zweite elektronische Schaltelement 906 sind jeweils als ein IGBT (insulated-gate bipolar transistor) ausgestaltet. Das erste elektronische Schaltelement 902 ist elektrisch in Reihe geschaltet mit dem zweiten elektronischen Schaltelement 906. Am Verbindungspunkt zwischen den beiden elektronischen Schaltelementen 902 und 906 ist ein erster galvanischer Modulanschluss 912 angeordnet. An dem Anschluss des zweiten elektronischen Schaltelements 906, welcher dem Verbindungspunkt gegenüberliegt, ist ein zweiter galvanischer Modulanschluss 915 angeordnet. Der zweite Modulanschluss 915 ist weiterhin mit einem ersten Anschluss des Energiespeichers 910 elektrisch verbunden; ein zweiter Anschluss des Energiespeichers 910 ist elektrisch verbunden mit dem Anschluss des ersten elektronischen Schaltelements 902, der dem Verbindungspunkt gegenüberliegt.

Der Energiespeicher 910 ist also elektrisch parallel geschaltet zu der Reihenschaltung aus dem ersten elektronischen Schaltelement 902 und dem zweiten elektronischen Schaltelement 906. Durch entsprechende Ansteuerung des ersten elektronischen Schaltelements 902 und des zweiten elektronischen Schaltelements 906 durch eine (nicht dargestellte) elektronische Steuereinrichtung des Stromrichters 800 kann erreicht werden, dass zwischen dem ersten Modulanschluss 912 und dem zweiten Modulanschluss 915 entweder die Spannung des Energiespeichers 910 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

In Figur 6 ist ein weiteres Ausführungsbeispiel eines Moduls 408_1 des Multilevelstromrichters 800 dargestellt. Neben dem ersten elektronischen Schaltelement 902, dem zweiten elektronischen Schaltelement 906, der ersten Freilaufdiode 904, der zweiten Freilaufdiode 908 und dem Energiespeicher 910, die bereits aus Figur 5 bekannt sind, weist das in Figur 6 dargestellte Modul 408_1 ein drittes elektronisches Schaltelement 1002 mit einer antiparallel geschalteten dritten Freilaufdiode 1004 sowie ein viertes elektronisches Schaltelement 1006 mit einer vierten antiparallel geschalteten Freilaufdiode 1008 auf. Das dritte elektronische Schaltelement 1002 und das vierte elektronische Schaltelement 1006 sind jeweils als ein IGBT ausgestaltet. Im Unterschied zur Schaltung der Figur 5 ist der zweite Modulanschluss 915 nicht mit dem zweiten elektronischen Schaltelement 906 elektrisch verbunden, sondern mit einem Mittelpunkt einer elektrischen Reihenschaltung aus dem dritten elektronischen Schaltelement 1002 und dem vierten elektronischen Schaltelement 1006.

Das Modul 408_1 der Figur 6 ist ein sogenanntes Vollbrücken-Modul, bei dem bei entsprechender Ansteuerung der vier elektronischen Schaltelemente 902, 906, 1002, 1006 zwischen dem ersten (galvanischen) Modulanschluss 912 und dem zweiten (galvanischen) Modulanschluss 915 wahlweise entweder die positive Spannung des Energiespeichers 910, die negative Spannung des Energiespeichers 910 oder eine Spannung des Wertes Null (Nullspannung) ausgegeben werden kann. Somit kann also mittels des Moduls 408_1 die Polarität der Ausgangsspannung umgekehrt werden. Der Multilevelstromrichter 800 kann entweder nur Halbbrücken-Module, nur Vollbrücken-Module oder auch Halbbrücken-Module und Vollbrücken-Module aufweisen.

Figur 7 zeigt ein Ablaufdiagramm eines Ausführungsbeispiels des erfindungsgemäßen Verfahrens mit Verfahrensschritten S1 bis S3 zum Betreiben eines Multilevelstromrichters 800 gemäß Figur 4.

In einem ersten Verfahrensschritt S1 wird für jedes Phasenmodul 400, 400', 400" ' eine Energiesummengröße $W_{\Sigma 1}$, $W_{\Sigma 2}$, $W_{\Sigma 3}$ ermittelt, die ein Maß für die Summe der Energien des ersten Phasenmodulzweigs 11, 11', 11" und des zweiten Phasenmodulzweigs 13, 13', 13" ist. Dabei bezeichnet $W_{\Sigma 1}$ die Energiesummengröße, die ein Maß für die Summe der Energien des ersten Phasenmodulzweigs 11 und des zweiten Phasenmodulzweigs 13 des ersten Phasenmoduls 400 ist, $W_{\Sigma 2}$ bezeichnet die Energiesummengröße, die ein Maß für die Summe der Energien des ersten Phasenmodulzweigs 11' und des zweiten Phasenmodulzweigs 13' des zweiten Phasenmoduls 400' ist, und $W_{\Sigma 3}$ bezeichnet die Energiesummengröße, die ein Maß für die Summe der Energien des ersten Phasenmodulzweigs 11" und des zweiten Phasenmodulzweigs 13" des dritten Phasenmoduls 400" ist. Beispielsweise wird die Energiesummengröße $W_{\Sigma 1}$, $W_{\Sigma 2}$, $W_{\Sigma 3}$ jedes Phasenmoduls 400, 400', 400" aus der an dem ersten Phasenmodulzweig 11, 11', 11" anliegenden Spannung $U_p$ und der an dem zweiten Phasenmodulzweig 13, 13', 13" anliegenden Spannung $U_n$ ermittelt.

Ferner wird in dem ersten Verfahrensschritt S1 für jedes Phasenmodul 400, 400', 400" in Abhängigkeit von der Schaltstellung der Schalteinrichtung 420, 420', 420" des Phasenmoduls 400, 400', 400" eine Energiedifferenzgröße $W_{\Delta 1}$, $W_{\Delta 2}$, $W_{\Delta 3}$ ermittelt, die in der ersten Schaltstellung 421 ein Maß für die Differenz der Energien des zweiten Phasenmodulzweigs 13, 13', 13" und des dritten Phasenmodulzweigs 404, 404', 404" und in der zweiten Schaltstellung 422 ein Maß für die Differenz der Energien des ersten Phasenmodulzweigs 11, 11', 11" und des dritten Phasenmodulzweigs 404, 404', 404" ist. Dabei bezeichnet $W_{\Delta 1}$ die Energiedifferenzgröße des ersten Phasenmoduls 400, $W_{\Delta 2}$ bezeichnet die Energiedifferenzgröße des zweiten Phasenmoduls 400' und $W_{\Delta 3}$ bezeichnet die Energiedifferenzgröße des dritten Phasenmoduls 400". Beispielsweise wird die Energiedifferenzgröße $W_{\Delta 1}$, $W_{\Delta 2}$, $W_{\Delta 3}$ jedes Phasenmoduls 404, 404', 404" in der ersten Schaltstellung 421 der Schalteinrichtung 420, 420', 420" des Phasenmoduls 400, 400', 400" aus der an dem zweiten Phasenmodulzweig 13, 13', 13" anliegenden Spannung $U_n$ und der an dem dritten Phasenmodulzweig 404, 404', 404" anliegenden Spannung Us und in der zweiten Schaltstellung 422 der Schalteinrichtung 420, 420', 420" des Phasenmoduls 400, 400', 400"' aus der an dem ersten Phasenmodulzweig 11, 11', 11" anliegenden Spannung $U_p$ und der an dem dritten Phasenmodulzweig 404, 404', 404" anliegenden Spannung Us ermittelt.

In einem zweiten Verfahrensschritt S2 wird aus den Energiesummengrößen $W_{\Sigma 1}$, $W_{\Sigma 2}$, $W_{\Sigma 3}$ aller Phasenmodule 400, 400', 400" ein Energiesummenraumzeiger gebildet. Ferner wird in dem zweiten Verfahrensschritt S2 aus den Energiedifferenzgrößen $W_{\Delta 1}$, $W_{\Delta 2}$, $W_{\Delta 3}$ aller Phasenmodule 400, 400', 400"' ein Energiedifferenzraumzeiger gebildet.

In einem dritten Verfahrensschritt S3 wird ein Gleichanteil von Kreisströmen des Multilevelstromrichters 800 in Abhängigkeit von dem Energiesummenraumzeiger zum Ausgleich von Energieungleichgewichten zwischen den Phasenmodulen 400, 400', 400"' geregelt. Ferner werden in dem dritten Verfahrensschritt S3 ein Mitsystem und ein Gegensystem der Kreisströme in Abhängigkeit von dem Energiedifferenzraumzeiger zum Ausgleich von Energieungleichgewichten zwischen den Phasenmodulzweigen 11, 11', 11", 13, 13', 13", 404, 404', 404" der einzelnen Phasenmodule 400, 400', 400" geregelt. Dazu wird aus dem Energiesummenraumzeiger und dem Energiedifferenzraumzeiger in unten näher beschriebener Weise ein Sollstromraumzeiger für die Kreisströme bestimmt und zur Regelung der Kreisströme verwendet.

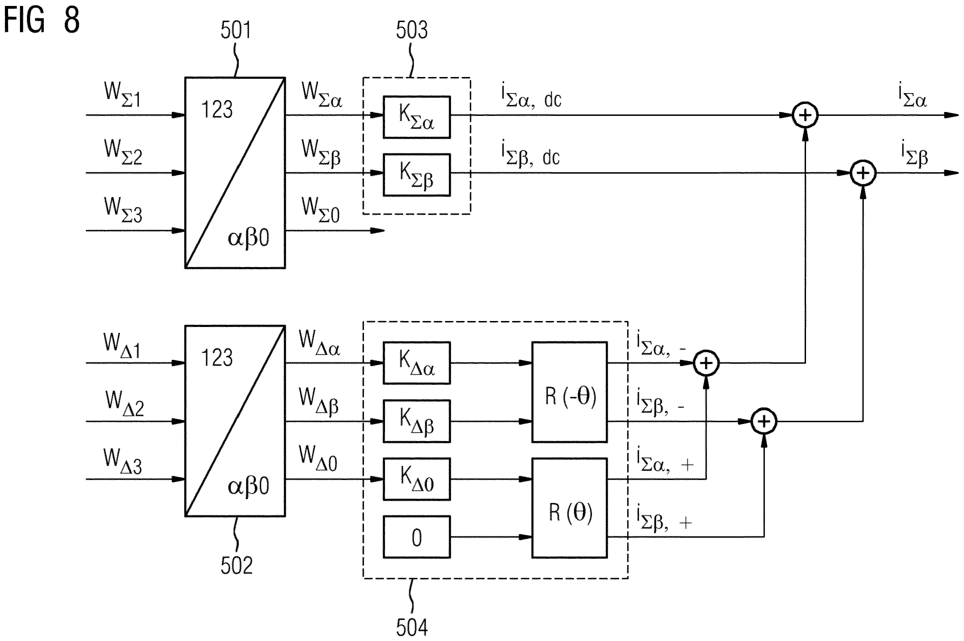

Figur 8 zeigt ein Blockdiagramm einer Bestimmung des Sollstromraumzeigers für die Regelung der Kreisströme zum Energieausgleich zwischen den Phasenmodulzweigen 11, 11', 11", 13, 13', 13", 404, 404', 404'' des Multilevelstromrichters 800.

Von einem ersten Transformierer 501 wird aus den Energiesummengrößen $W_{\Sigma 1}$, $W_{\Sigma 2}$, $W_{\Sigma 3}$ ein Energiesummenraumzeiger mit Komponenten $W_{\Sigma\alpha}$, $W_{\Sigma\beta}$, $W_{\Sigma 0}$ gebildet. Von einem ersten Sollwertbilder 503 wird aus der $\alpha$-Komponente $W_{\Sigma\alpha}$ des Energiesummenraumzeigers ein Gleichanteil $i_{\Sigma\alpha,dc}$ einer $\alpha$-Komponente $i_{\Sigma\alpha}$ des Sollstromraumzeigers gebildet. Ferner wird von dem ersten Sollwertbilder 503 aus der $\beta$-Komponente $W_{\Sigma\beta}$ des Energiesummenraumzeigers ein Gleichanteil $i_{\Sigma\beta,dc}$ einer $\beta$-Komponente $i_{\Sigma\beta}$ des Sollstromraumzeigers gebildet.

Von einem zweiten Transformierer 502 wird aus den Energiedifferenzgrößen $W_{\Delta 1}$, $W_{\Delta 2}$, $W_{\Delta 3}$ ein Energiedifferenzraumzeiger mit Komponenten $W_{\Delta\alpha}$, $W_{\Delta\beta}$, $W_{\Delta 0}$ gebildet. Von einem zweiten Sollwertbilder 504 werden aus der $\alpha$-Komponente $W_{\Delta\alpha}$ und der $\beta$-Komponente $W_{\Delta\beta}$ des Energiedifferenzraumzeigers ein Gegensystemanteil $i_{\Sigma\alpha,-}$ einer $\alpha$-Komponente $i_{\Sigma\alpha}$ des Sollstromraumzeigers und ein Gegensystemanteil $i_{\Sigma\beta,-}$ einer $\beta$-Komponente $i_{\Sigma\beta}$ des Sollstromraumzeigers gebildet. Ferner werden von dem zweiten Sollwertbilder 504 aus der 0-Komponente $W_{\Delta 0}$ des Energiedifferenzraumzeigers ein Mitsystemanteil $i_{\Sigma\alpha,+}$ einer $\alpha$-Komponente $i_{\Sigma\alpha}$ des Sollstromraumzeigers und ein Mitsystemanteil $i_{\Sigma\beta,+}$ einer $\beta$-Komponente $i_{\Sigma\beta}$ des Sollstromraumzeigers gebildet. Zur Bildung der Gegensystemanteile $i_{\Sigma\alpha,-}$, $i_{\Sigma\beta,-}$ und der Mitsystemanteile $i_{\Sigma\alpha,+}$, $i_{\Sigma\beta,+}$ werden die Stromkomponenten in ein mit einer Netzfrequenz des Multilevelstromrichters 800 rotierendes Koordinatensystem überführt und in ihr Gegen- und Mitsystem aufgespalten. Dazu werden Drehmatrizen

$$R(-\theta) = \begin{pmatrix} \cos(\theta) & \sin(\theta) \\ -\sin(\theta) & \cos(\theta) \end{pmatrix}, \qquad R(\theta) = \begin{pmatrix} \cos(\theta) & -\sin(\theta) \\ \sin(\theta) & \cos(\theta) \end{pmatrix}$$

verwendet, mit denen die jeweiligen Stromkomponenten in das Gegen- beziehungsweise Mitsystem mit einem Drehwinkel $-\theta$ beziehungsweise $\theta$ transformiert werden.

Die $\alpha$-Komponente $i_{\Sigma\alpha}$ des Sollstromraumzeigers wird durch Addition aus ihrem Gleichanteil $i_{\Sigma\alpha,dc}$, ihrem Gegensystemanteil $i_{\Sigma\alpha,-}$ und ihrem Mitsystemanteil $i_{\Sigma\alpha,+}$ gebildet. Die $\beta$-Komponente $i_{\Sigma\beta}$ des Sollstromraumzeigers wird durch Addition aus ihrem Gleichanteil $i_{\Sigma\beta,dc}$, ihrem Gegensystemanteil $i_{\Sigma\beta,-}$ und ihrem Mitsystemanteil $i_{\Sigma\beta,+}$ gebildet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1_1 ... 1_n | Modul eines ersten Phasenmodulzweigs |
| 2_1 ... 2_n | Modul eines zweiten Phasenmodulzweigs |
| 5, 5', 5'' | Wechselspannungsanschluss |
| 11, 11', 11'' | erster Phasenmodulzweig |
| 13, 13', 13" | zweiter Phasenmodulzweig |
| 16, 17 | Gleichspannungsanschluss |
| 202 | Masseanschluss |
| 400, 400', 400" | Phasenmodul |
| 404, 404', 404" | dritter Phasenmodulzweig |
| 408_1 ... 408_n | Modul eines dritten Phasenmodulzweigs |
| 412, 412', 412" | erster Verbindungspunkt |
| 416, 416', 416" | zweiter Verbindungspunkt |
| 420, 420', 420" | Schalteinrichtung |
| 424, 424', 424" | erster leistungselektronischer Schalter |
| 428, 428', 428" | zweiter leistungselektronischer Schalter |
| 421, 422 | Schaltstellung |
| 501, 502 | Transformierer |
| 503, 504 | Sollwertbilder |
| 800 | Multilevelstromrichter |
| 902, 906, 1002, 1006 | elektronisches Schaltelement |
| 904, 908, 1004, 1008 | Diode |

| | |
|---|---|
| 910 | Energiespeicher |
| 912, 915 | Modulanschluss |
| $i_{\Sigma\alpha}$, $i_{\Sigma\beta}$ | Komponente eines Sollstromraumzeigers |
| $i_{\Sigma\alpha,dc}$, $i_{\Sigma\beta,dc}$ | Gleichanteil einer Komponente eines Sollstromraumzeigers |
| $i_{\Sigma\alpha,-}$, $i_{\Sigma\beta,-}$ | Gegensystemanteil einer Komponente eines Sollstromraumzeigers |
| $i_{\Sigma\alpha,-}$, $i_{\Sigma\beta,+}$ | Mitsystemanteil einer Komponente eines Sollstromraumzeigers |
| S1 bis S3 | Verfahrensschritt |
| t | Zeit |
| T | Periodendauer |
| T1 bis T4 | Thyristor |
| U | Spannung |
| $U_{ac}$ | Wechselspannung |
| $U_{dc}$ | Gleichspannung |
| $U_n$ | Spannung an einem zweiten Phasenmodulzweig |
| $U_p$ | Spannung an einem ersten Phasenmodulzweig |
| Us | Spannung an einem dritten Phasenmodulzweig |
| $W_{\Delta 1}$, $W_{\Delta 2}$, $W_{\Delta 3}$ | Energiedifferenzgröße |
| $W_{\Delta\alpha}$, $W_{\Delta\beta}$, $W_{\Delta 0}$ | Komponente eines Energiedifferenzraumzeigers |
| $W_{\Sigma 1}$, $W_{\Sigma 2}$, $W_{\Sigma 3}$ | Energiesummengröße |
| $W_{\Sigma\alpha}$, $W_{\Sigma\beta}$, $W_{\Sigma 0}$ | Komponente eines Energiesummenraumzeigers |

## Patentansprüche

1. Verfahren zum Betreiben eines Multilevelstromrichters (800) mit mehreren Phasenmodulen (400, 400', 400''), die zueinander parallel geschaltet zwischen einem ersten Gleichspannungsanschluss (16) und einem zweiten Gleichspannungsanschluss (17) des Multilevelstromrichters (800) angeordnet sind und jeweils eine Vielzahl von Modulen (1_1 ... 1_n; 2_1 ... 2_n; 408_1 ... 408_n) mit jeweils mindestens zwei elektronischen Schaltelementen (902, 906) und einem elektrischen Energiespeicher (910) aufweisen, wobei jedes Phasenmodul (400, 400', 400'') einen ersten Phasenmodulzweig (11, 11', 11'') aufweist, der mit dem ersten Gleichspannungsanschluss (16) verbunden ist, einen zweiten Phasenmodulzweig (13, 13', 13'') aufweist, der mit dem zweiten Gleichspannungsanschluss (17) verbunden ist, einen dritten Phasenmodulzweig (404, 404', 404'') aufweist, der den ersten Phasenmodulzweig (11, 11', 11'') mit dem zweiten Phasenmodulzweig (13, 13', 13'') verbindet, und eine Schalteinrichtung (420, 420', 420'') aufweist, welche in einer ersten Schaltstellung (421) einen Wechselspannungsanschluss (5, 5', 5'') des Phasenmoduls (400, 400', 400'') mit einem ersten Verbindungspunkt (412, 412', 412'') zwischen dem ersten Phasenmodulzweig (11, 11', 11'') und dem dritten Phasenmodulzweig (404, 404', 404'') verbindet und in einer zweiten Schaltstellung (422) den Wechselspannungsanschluss (5, 5', 5'') mit einem zweiten Verbindungspunkt (416, 416', 416'') zwischen dem dritten Phasenmodulzweig (404, 404', 404'') und dem zweiten Phasenmodulzweig (13, 13', 13'') verbindet, wobei der dritte Phasenmodulzweig (404) mindestens ein Modul (408_1) mit einer Vollbrückenschaltung aufweist, **dadurch gekennzeichnet, dass** bei dem Verfahren

   - für jedes Phasenmodul (400, 400', 400'') eine Energiesummengröße ($W_{\Sigma 1}$, $W_{\Sigma 2}$, $W_{\Sigma 3}$) ermittelt wird, die ein Maß für die Summe der Energien des ersten Phasenmodulzweigs (11, 11', 11'') und des zweiten Phasenmodulzweigs (13, 13', 13'') ist,
   - für jedes Phasenmodul (400, 400', 400'') in Abhängigkeit von der Schaltstellung (421, 422) der Schalteinrichtung (420, 420', 420'') des Phasenmoduls (400, 400', 400'') eine Energiedifferenzgröße ($W_{\Delta 1}$, $W_{\Delta 2}$, $W_{\Delta 3}$) ermittelt wird, die in der ersten Schaltstellung (421) ein Maß für die Differenz der Energien des zweiten Phasenmodulzweigs (13, 13', 13'') und des dritten Phasenmodulzweigs (404, 404', 404'') und in der zweiten Schaltstellung (422) ein Maß für die Differenz der Energien des ersten Phasenmodulzweigs (11, 11', 11'') und des dritten Phasenmodulzweigs (404, 404', 404'') ist, und
   - Kreisströme des Multilevelstromrichters (800) in Abhängigkeit von den Energiesummengrößen ($W_{\Sigma 1}$, $W_{\Sigma 2}$, $W_{\Sigma 3}$) und Energiedifferenzgrößen ($W_{\Delta 1}$, $W_{\Delta 2}$, $W_{\Delta 3}$) der Phasenmodule (400, 400', 400'') zum Ausgleich von Energieungleichgewichten zwischen den Phasenmodulzweigen (11, 11', 11'', 13, 13', 13'', 404, 404', 404'') geregelt werden.

2. Verfahren nach Anspruch 1, wobei aus den Energiesummengrößen ($W_{\Sigma 1}$, $W_{\Sigma 2}$, $W_{\Sigma 3}$) aller Phasenmodule (400, 400', 400'') ein Energiesummenraumzeiger gebildet wird und ein Gleichanteil der Kreisströme in Abhängigkeit von dem Energiesummenraumzeiger zum Ausgleich von Energieungleichgewichten zwischen den Phasenmodulen

(400, 400', 400'') geregelt wird.

3. Verfahren nach Anspruch 2, wobei die Energiesummengröße ($W_{\Sigma 1}$, $W_{\Sigma 2}$, $W_{\Sigma 3}$) jedes Phasenmoduls (400, 400', 400'') aus einer an dem ersten Phasenmodulzweig (11, 11', 11'') anliegenden Spannung ($U_p$) und einer an dem zweiten Phasenmodulzweig (13, 13', 13'') anliegenden Spannung ($U_n$) ermittelt wird.

4. Verfahren nach einem der vorhergehenden Ansprüche, wobei aus den Energiedifferenzgrößen ($W_{\Delta 1}$, $W_{\Delta 2}$, $W_{\Delta 3}$) aller Phasenmodule (400, 400', 400'') ein Energiedifferenzraumzeiger gebildet wird und ein Mitsystem und ein Gegensystem der Kreisströme in Abhängigkeit von dem Energiedifferenzraumzeiger zum Ausgleich von Energieungleichgewichten zwischen den Phasenmodulzweigen (11, 11', 11'', 13, 13', 13'', 404, 404', 404'') der einzelnen Phasenmodule (400, 400', 400'') geregelt werden.

5. Verfahren nach Anspruch 4, wobei die Energiedifferenzgröße ($W_{\Delta 1}$, $W_{\Delta 2}$, $W_{\Delta 3}$) jedes Phasenmoduls (400, 400', 400'') in der ersten Schaltstellung (421) der Schalteinrichtung (420, 420', 420'') des Phasenmoduls (400, 400', 400'') aus einer an dem zweiten Phasenmodulzweig (13, 13', 13'') anliegenden Spannung ($U_n$) und einer an dem dritten Phasenmodulzweig (404, 404', 404'') anliegenden Spannung (Us) und in der zweiten Schaltstellung (422) der Schalteinrichtung (420, 420', 420'') des Phasenmoduls (400, 400', 400'') aus einer an dem ersten Phasenmodulzweig (11, 11', 11'') anliegenden Spannung ($U_p$) und der an dem dritten Phasenmodulzweig (404, 404', 404') anliegenden Spannung (Us) ermittelt wird.

6. Verfahren nach einem der vorhergehenden Ansprüche, wobei die Schalteinrichtung (420, 420', 420'') jedes Phasenmoduls (400, 400', 400'') in der zweiten Schaltstellung (422) den Wechselspannungsanschluss (5, 5', 5'') des Phasenmoduls (400, 400', 400'') von dem ersten Verbindungspunkt (412, 412', 412'') trennt und in der ersten Schaltstellung (421) den Wechselspannungsanschluss (5, 5', 5'') des Phasenmoduls (400, 400', 400'') von dem zweiten Verbindungspunkt (416, 416', 416'') trennt.

7. Verfahren nach einem der vorhergehenden Ansprüche, wobei mindestens ein Modul (408_1 ... 408_n) jedes dritten Phasenmodulzweigs (404, 404', 404'') so ausgestaltet ist, dass es eine Spannung positiver oder negativer Polarität auszugeben imstande ist.

8. Verfahren nach einem der vorhergehenden Ansprüche, wobei mindestens ein Modul (408_1 ... 408_n) jedes dritten Phasenmodulzweigs (404, 404', 404'') eine Vollbrückenschaltung aufweist.

9. Verfahren nach einem der vorhergehenden Ansprüche, wobei die Schalteinrichtung (420, 420', 420'') jedes Phasenmoduls (400, 400', 400'') die Schaltstellungen (421, 422) in Abhängigkeit von einem Augenblickswert einer an dem Wechselspannungsanschluss (5, 5', 5'') des Phasenmoduls (400, 400', 400'') anliegenden Wechselspannung ($U_{ac}$) einnimmt.

10. Verfahren nach einem der vorhergehenden Ansprüche, wobei die Schalteinrichtung (420, 420', 420'') jedes Phasenmoduls (400, 400', 400'') die erste Schaltstellung (421) einnimmt, wenn der Augenblickswert der an dem Wechselspannungsanschluss (5, 5', 5'') des Phasenmoduls (400, 400', 400'') anliegenden Wechselspannung ($U_{ac}$) größer Null ist, und die Schalteinrichtung (420, 420', 420'') jedes Phasenmoduls (420, 420', 420'') die zweite Schaltstellung (422) einnimmt, wenn der Augenblickswert der an dem Wechselspannungsanschluss (5, 5', 5'') des Phasenmoduls (400, 400', 400'') anliegenden Wechselspannung ($U_{ac}$) kleiner Null ist, oder

- die Schalteinrichtung (420, 420', 420'') jedes Phasenmoduls (400, 400', 400'') die erste Schaltstellung (421) einnimmt, wenn der Augenblickswert der an dem Wechselspannungsanschluss (5, 5', 5'') des Phasenmoduls (400, 400', 400'') anliegenden Wechselspannung ($U_{ac}$) in einem ersten vorgewählten Spannungsbereich liegt, und die Schalteinrichtung (420, 420', 420'') jedes Phasenmoduls (400, 400', 400'') die zweite Schaltstellung (422) einnimmt, wenn der Augenblickswert der an dem Wechselspannungsanschluss (5, 5', 5'') des Phasenmoduls (400, 400', 400'') anliegenden Wechselspannung ($U_{ac}$) in einem zweiten vorgewählten Spannungsbereich liegt.

**Claims**

1. Method for operating a multilevel converter (800) having multiple phase modules (400, 400', 400''), which are arranged connected in parallel with one another between a first DC voltage connection (16) and a second DC voltage connection (17) of the multilevel converter (800) and each have a plurality of modules (1_1 ... 1_n; 2_1 ... 2_n; 408_1 ... 408_n) each having at least two electronic switching elements (902, 906) and an electrical energy store (910), wherein each phase module (400, 400', 400'') has a first phase module branch (11, 11', 11"), which is connected to the first DC voltage connection (16), a second phase module branch (13, 13', 13''), which is connected to the second DC voltage connection (17), a third phase module branch (404, 404', 404''), which connects the first phase module branch (11, 11', 11'') to the second phase module branch (13, 13', 13''), and has a switching device (420, 420', 420''), which in a first switching position (421) connects an AC voltage connection (5, 5', 5") of the phase module (400, 400', 400") to a first connecting point (412, 412', 412'') between the first phase module branch (11, 11', 11'') and the third phase module branch (404, 404', 404'') and in a second switching position (422) connects the AC voltage connection (5, 5', 5") to a second connecting point (416, 416', 416'') between the third phase module branch (404, 404', 404'') and the second phase module branch (13, 13', 13''), wherein the third phase module branch (404) has at least one module (408_1) with a full-bridge circuit, **characterized in that**, in the method

- an energy summation variable ($W_{\Sigma 1}$, $W_{\Sigma 2}$, $W_{\Sigma 3}$), which is a measure of the sum of the energies of the first phase module branch (11, 11', 11'') and the second phase module branch (13, 13', 13''), is determined for each phase module (400, 400', 400''),
- an energy difference variable ($W_{\Delta 1}$, $W_{\Delta 2}$, $W_{\Delta 3}$), which in the first switching position (421) is a measure of the difference between the energies of the second phase module branch (13, 13', 13'') and the third phase module branch (404, 404', 404'') and in the second switching position (422) is a measure of the difference between the energies of the first phase module branch (11, 11', 11'') and the third phase module branch (404, 404', 404''), is determined for each phase module (400, 400', 400'') depending on the switching position (421, 422) of the switching device (420, 420', 420'') of the phase module (400, 400', 400"), and
- circulating currents of the multilevel converter (800) are controlled depending on the energy summation variables ($W_{\Sigma 1}$, $W_{\Sigma 2}$, $W_{\Sigma 3}$) and energy difference variables ($W_{\Delta 1}$, $W_{\Delta 2}$, $W_{\Delta 3}$) of the phase modules (400, 400', 400'') in order to compensate for energy imbalances between the phase module branches (11, 11', 11'', 13, 13', 13", 404, 404', 404").

2. Method according to claim 1, wherein an energy summation space vector is formed from the energy summation variables ($W_{\Sigma 1}$, $W_{\Sigma 2}$, $W_{\Sigma 3}$) of all phase modules (400, 400', 400") and a DC component of the circulating currents is controlled depending on the energy summation space vector in order to compensate for energy imbalances between the phase modules (400, 400', 400").

3. Method according to claim 2, wherein the energy summation variable ($W_{\Sigma 1}$, $W_{\Sigma 2}$, $W_{\Sigma 3}$) of each phase module (400, 400', 400") is determined from a voltage ($U_p$) applied to the first phase module branch (11, 11', 11'') and a voltage ($U_n$) applied to the second phase module branch (13, 13', 13'').

4. Method according to one of the preceding claims, wherein an energy difference space vector is formed from the energy difference variables ($W_{\Delta 1}$, $W_{\Delta 2}$, $W_{\Delta 3}$) of all phase modules (400, 400', 400'') and a positive phase-sequence system and a negative phase-sequence system of the circulating currents are controlled depending on the energy difference space vector in order to compensate for energy imbalances between the phase module branches (11, 11', 11", 13, 13', 13", 404, 404', 404") of the individual phase modules (400, 400', 400").

5. Method according to Claim 4, wherein the energy difference variable ($W_{\Delta 1}$, $W_{\Delta 2}$, $W_{\Delta 3}$) of each phase module (400, 400', 400") is determined in the first switching position (421) of the switching device (420, 420', 420") of the phase module (400, 400', 400") from a voltage ($U_n$) applied to the second phase module branch (13, 13', 13") and a voltage ($U_s$) applied to the third phase module branch (404, 404', 404") and in the second switching position (422) of the switching device (420, 420', 420") of the phase module (400, 400', 400") from a voltage ($U_p$) applied to the first phase module branch (11, 11', 11") and the voltage ($U_s$) applied to the third phase module branch (404, 404', 404").

6. Method according to one of the preceding claims, wherein the switching device (420, 420', 420") of each phase module (400, 400', 400") in the second switching position (422) disconnects the AC voltage connection (5, 5', 5") of the phase module (400, 400', 400") from the first connecting point (412, 412', 412") and in the first switching position (421) disconnects the AC voltage connection (5, 5', 5") of the phase module (400, 400', 400") from the second connecting point (416, 416', 416").

7. Method according to one of the preceding claims, wherein at least one module (408_1 ... 408_n) of each third phase module branch (404, 404', 404'') is designed so that it is capable of outputting a voltage with a positive or negative polarity.

8.  Method according to one of the preceding claims, wherein at least one module (408_1 ... 408_n) of each third phase module branch (404, 404', 404") has a full-bridge circuit.

9.  Method according to one of the preceding claims, wherein the switching device (420, 420', 420'') of each phase module (400, 400', 400'') assumes the switching positions (421, 422) depending on an instantaneous value of an AC voltage ($U_{ac}$) applied to the AC voltage connection (5, 5', 5'') of the phase module (400, 400', 400").

10. Method according to one of the preceding claims, wherein the switching device (420, 420', 420'') of each phase module (400, 400', 400'') assumes the first switching position (421) when the instantaneous value of the AC voltage ($U_{ac}$) applied to the AC voltage connection (5, 5', 5'') of the phase module (400, 400', 400'') is greater than zero and the switching device (420, 420', 420'') of each phase module (400, 400', 400'') assumes the second switching position (422) when the instantaneous value of the AC voltage ($U_{ac}$) applied to the AC voltage connection (5, 5', 5'') of the phase module (400, 400', 400'') is smaller than zero, or

    - the switching device (420, 420', 420'') of each phase module (400, 400', 400'') assumes the first switching position (421) when the instantaneous value of the AC voltage ($U_{ac}$) applied to the AC voltage connection (5, 5', 5'') of the phase module (400, 400', 400'') lies within a first preselected voltage range and the switching device (420, 420', 420'') of each phase module (400, 400', 400'') assumes the second switching position (422) when the instantaneous value of the AC voltage ($U_{ac}$) applied to the AC voltage connection (5, 5', 5'') of the phase module (400, 400', 400'') lies within a second preselected voltage range.

**Revendications**

1.  Procédé pour faire fonctionner un convertisseur (800) à plusieurs niveaux comprenant plusieurs modules (400, 400', 400") de phase, qui sont montés en parallèle les uns avec les autres entre une première borne (16) de tension continue et une deuxième borne (17) de tension continue du convertisseur (800) à plusieurs niveaux et qui ont chacun une pluralité de modules (1_1 ... 1_n ; 2_1 ... 2_n ; 408_1 ... 408_n) ayant respectivement au moins deux éléments (902, 906) électroniques de coupure et un accumulateur (910) d'énergie électrique, dans lequel chaque module (400, 400', 400'') de phase a une première branche (11, 11', 11'') de module de phase, qui est reliée à la première borne (16) de tension continue, une deuxième branche (13, 13', 13") de module de phase, qui est reliée à la deuxième borne (17) de tension continue, une troisième branche (404, 404', 404'') de module de phase, qui relie la première branche (11, 11', 11'') de module de phase à la deuxième branche (13, 13', 13") de module de phase, et un dispositif (420, 420', 420'') de commutation, qui, dans une première position (421) de commutation, relie une borne (5, 5', 5") de tension alternative du module (400, 400', 400") de phase à un premier point (412, 412', 412") de liaison entre la première branche (11, 11', 11'') de module de phase et la troisième branche (404, 404', 404") de module de phase et, dans une deuxième position (422) de commutation, relie la borne (5, 5', 5'') de tension alternative à un deuxième point (416, 416', 416'') de liaison entre la troisième branche (404, 404', 404'') de module de phase et la deuxième branche (13, 13', 13") de module de phase, la troisième branche (404) de module de phase ayant au moins un module (408_1) ayant un circuit à pont complet,
    **caractérisé en ce que**
    dans le procédé

    - pour chaque module (400, 400', 400") de phase, on détermine une grandeur ($W_{\Sigma 1}$, $W_{\Sigma 2}$, $W_{\Sigma 3}$) de somme d'énergie, qui est une mesure de la somme des énergies de la première branche (11, 11', 11") de module de phase et de la deuxième branche (13, 13', 13") de module de phase,
    - pour chaque module (400, 400', 400'') de phase, on détermine, en fonction de la position (421, 422) de commutation du dispositif (420, 420', 420") de commutation du module (400, 400', 400") de phase, une grandeur ($W_{\Delta 1}$, $W_{\Delta 2}$, $W_{\Delta 3}$) de différence d'énergie, qui est, dans la première position (421) de commutation, une mesure de la différence des énergies de la deuxième branche (13, 13', 13'') de module de phase et de la troisième branche (404, 404', 404'') de module de phase et, dans la deuxième position (422) de commutation, une mesure de la différence des énergies de la première branche (11, 11', 11'') de module de phase et de la troisième branche (404, 404', 404'') de module de phase, et
    - on régule des courants circulaires du convertisseur (800) à plusieurs niveaux en fonction des grandeurs ($W_{\Sigma 1}$, $W_{\Sigma 2}$, $W_{\Sigma 3}$) de somme d'énergie et des grandeurs ($W_{\Delta 1}$, $W_{\Delta 2}$, $W_{\Delta 3}$) de différence d'énergie des modules (400, 400', 400") de phase pour la compensation de déséquilibres d'énergie entre les branches (11, 11', 11'', 13, 13', 13'', 404, 404', 404'') de module de phase.

**EP 3 867 987 B1**

2.  Procédé suivant la revendication 1, dans lequel, à partir des grandeurs ($W_{\Sigma1}$, $W_{\Sigma2}$, $W_{\Sigma3}$) de somme d'énergie de tous les modules (400, 400', 400'') de phase, on forme un vecteur d'espace de somme d'énergie et on régule une même proportion des courants circulaires, en fonction du vecteur d'espace de somme d'énergie, pour la compensation des déséquilibres d'énergie entre les modules (400, 400', 400'') de phase.

3.  Procédé suivant la revendication 2, dans lequel on détermine les grandeurs ($W_{\Sigma1}$, $W_{\Sigma2}$, $W_{\Sigma3}$) de somme d'énergie de chaque module (400, 400', 400'') de phase à partir d'une tension ($U_p$) s'appliquant à la première branche (11, 11', 11'') de module de phase et d'une tension ($U_n$) s'appliquant à la deuxième branche (13, 13', 13'') de module de phase.

4.  Procédé suivant l'une des revendications précédentes, dans lequel on forme, à partir des grandeurs ($W_{\Delta1}$, $W_{\Delta2}$, $W_{\Delta3}$) de différence d'énergie de tous les modules (400, 400', 400'') de phase, un vecteur d'espace de différence d'énergie et on régule un système direct et un système inverse des courants circulaires, en fonction du vecteur d'espace de différence d'énergie pour la compensation de déséquilibres d'énergie entre les branches (11, 11', 11'', 13, 13', 13'', 404, 404', 404'') de module de phase des divers modules (400, 400', 400'') de phase.

5.  Procédé suivant la revendication 4, dans lequel on détermine des grandeurs ($W_{\Delta1}$, $W_{\Delta2}$, $W_{\Delta3}$) de différence d'énergie de chaque module (400, 400', 400'') de phase dans la première position (421) de commutation du dispositif (420, 420', 420'') de commutation du module (400, 400', 400'') de phase, à partir d'une tension ($U_n$) s'appliquant à la deuxième branche (13, 13', 13'') de module de phase et d'une tension ($U_s$) s'appliquant à la troisième branche (404, 404', 404'') de module de phase et, dans la deuxième position (422) de commutation du dispositif (420, 420', 420'') de commutation du module (400, 400', 400'') de phase, à partir d'une tension ($U_p$) s'appliquant à la première branche (11, 11', 11'') de module de phase et de la tension ($U_s$) s'appliquant à la troisième branche (404, 404', 404'') de module de phase.

6.  Procédé suivant l'une des revendications précédentes, dans lequel le dispositif (420, 420', 420'') de commutation de chaque module (400, 400', 400'') de phase sépare, dans la deuxième position (422) de commutation, la borne (5, 5', 5'') de tension alternative du module (400, 400', 400'') de phase du premier point (412, 412', 412'') de liaison et, dans la première position (421) de commutation, sépare la borne (5, 5', 5'') de tension alternative du module (400, 400', 400'') de phase du deuxième point (416, 416', 416'') de liaison.

7.  Procédé suivant l'une des revendications précédentes, dans lequel au moins un module (408_1 ... 408_n) de chaque troisième branche (404, 404', 404'') de module de phase est conformé de manière à être en mesure de donner une tension de polarité positive ou négative.

8.  Procédé suivant l'une des revendications précédentes, dans lequel au moins un module (408_1 ... 408_n) de chaque troisième branche (404, 404', 404'') de module de phase a un circuit à pont complet.

9.  Procédé suivant l'une des revendications précédentes, dans lequel le dispositif (420, 420', 420'') de commutation de chaque module (400, 400', 400'') de phase prend les positions (421, 422) de commutation en fonction d'une valeur instantanée d'une tension ($U_{ac}$) alternative s'appliquant à la borne (5, 5', 5'') de tension alternative du module (400, 400', 400'') de phase.

10. Procédé suivant l'une des revendications précédentes, dans lequel le dispositif (420, 420', 420'') de commutation de chaque module (400, 400', 400'') de phase prend la première position (421) de commutation, si la valeur instantanée de la tension ($U_{ac}$) alternative, s'appliquant à la borne (5, 5', 5'') de tension alternative du module (400, 400', 400'') de phase, est plus grande que zéro, et le dispositif (420, 420', 420'') de commutation de chaque module (420, 420', 420'') de phase prend la deuxième position (422) de commutation, si la valeur instantanée de la tension ($U_{ac}$) alternative, s'appliquant à la borne (5, 5', 5'') de tension alternative du module (400, 400', 400'') de phase, est plus petite que zéro, ou

    - le dispositif (420, 420', 420'') de commutation de chaque module (400, 400', 400'') de phase prend la première position (421) de commutation, si la valeur instantanée de la tension ($U_{ac}$) alternative, s'appliquant à la borne (5, 5', 5'') de tension alternative du module (400, 400', 400'') de phase, est dans une première plage de tension sélectionnée à l'avance, et le dispositif (420, 420', 420'') de commutation de chaque module (400, 400', 400'') de phase prend la deuxième position (422) de commutation, si la valeur instantanée de la tension ($U_{ac}$) alternative, s'appliquant à la borne (5, 5', 5'') de tension alternative du module (400, 400', 400'') de phase, est dans une deuxième plage de tension sélectionnée à l'avance.

# FIG 1

## FIG 2

$U_{ac} > 0$        $U_{ac} < 0$

$U$

$+U_{dc} / 2$

$U_p$

$U_s$

$U_p + U_s$    $U_p$

$U_{ac}$

0

0    T/4      T/2      3/4T      T    t

$U_n + U_s$    $U_n$

$U_s$

$-U_{dc} / 2$

$U_n$

$U_{ac} > 0 \ ( \ 0 \dots T/2 \ ) : 424 \ \text{ein}, 428 \ \text{aus}$

$U_{ac} < 0 \ ( \ T/2 \dots T \ ) : 424 \ \text{aus}, 428 \ \text{ein}$

## FIG 3

16

400

420

$U_p$   11

412    $U_{ac} > 0$

$U_{dc} / 2$

424

5

$U_s$   404

$U_{ac}$

$U_{ac}$

202

428

416    $U_{ac} < 0$

$U_n$   13

$U_{dc} / 2$

17

FIG 4

FIG 5

1_1

912

902

904

906

908

915

910

FIG 6

408_1

912

902

904

1002

1004

906

908

1006

1008

915

910

FIG 7

S1

S2

S3

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018221907 A1
- WO 2018221906 A1
- WO 2016192758 A1
- WO 2019007502 A1